# EUROPÄISCHE PATENTSCHRIFT

(11) **EP 3 986 694 B1**
(45) Veröffentlichungstag und Bekanntmachung des Hinweises auf die Patenterteilung: **26.02.2025**
(21) Anmeldenummer: 20732830.3
(22) Anmeldetag: 10.06.2020
(51) Int. Cl.: B29C 49/56, B29C 49/70, B65B 3/10, B65B 39/12, B65B 55/24, B29C 49/36

(54) **VERFAHREN UND VORRICHTUNG ZUM HERSTELLEN VON GEFÜLLTEN BEHÄLTERN AUS VORFORMLINGEN**
METHOD AND DEVICE FOR PRODUCING FILLED CONTAINERS FROM PREFORMS
PROCÉDÉ ET DISPOSITIF DE PRODUCTION DE RÉCIPIENTS REMPLIS À PARTIR DE PRÉFORMES

(30) Priorität: 19.06.2019 DE 102019116598
(43) Veröffentlichungstag der Anmeldung: 27.04.2022
(73) Patentinhaber: KHS GmbH, 44143 Dortmund (DE)
(72) Erfinder: LINKE, Michael, 22159 Hamburg (DE); MEYER, Niels, 22869 Schenefeld (DE); LITZENBERG, Michael, 21039 Börnsen (DE)
(74) Vertreter: Eisenführ Speiser
(86) Internationale Anmeldenummer: PCT/EP2020/066144
(87) Internationale Veröffentlichungsnummer: WO 2020/254174

(56) Entgegenhaltungen:
- EP-A1- 3 178 629
- WO-A1-2012/156013
- US-A1- 2016 059 469
- US-A1- 2017 021 553

## Beschreibung

Die Erfindung betrifft ein Verfahren zum Herstellen von gefüllten Behältern aus Vorformlingen, wobei die Vorformlinge jeweils an ein umlaufendes Form- und Füllelement einer Form- und Füllstation übergeben und in einem anschließenden Form- und Füllprozess in einer Form der umlaufenden Form- und Füllstation durch Druckeinwirkung eines zugeführten Füllgutes in den jeweiligen Behälter umgeformt werden, wobei die Form mit Bodenform und Formhälften mehrteilig ausgebildet ist, und der jeweilige Behälter zumindest am Ende des Form- und Füllprozesses zwischen Bodenform unten und Form- und Füllelement oben eingespannt ist, und wobei der Behälter nach dem Formen und Füllen von dem jeweiligen Form- und Füllelement und der jeweiligen Form getrennt wird.

US2016059469A1 offenbart ein Verfahren und eine Vorrichtung zum Herstellen von gefüllten Behältern aus Vorformlingen, mit karussellartig umlaufenden Form- und Füllstationen, welche auf einem Arbeitsrad angeordnet sind und zu den Stationen gehörende Form- und Füllelemente und Formen zur Aufnahme der Vorformlinge aufweisen, die also mit den Form- und Füllstationen umlaufen, wobei das Form- und Füllelement für das Füllen des Vorformlings mit einem flüssigen Füllgut ausgebildet ist und zumindest eine Fülldüse beinhaltet, und wobei das Form- und Füllelement eine nach oben gerichtete Öffnung des Vorformlings während des Füllvorgangs abdichtend ausgebildet ist, sodass kein Füllgut unkontrolliert austreten kann, und wobei zur Entnahme des gefüllten Behälters das Form- und Füllelement von der Öffnung abhebbar ist und die Form geöffnet werden kann, wobei die Vorformlinge jeweils an die Form- und Füllelemente übergebbar und in der Form durch Druckeinwirkung eines zugeführten Füllgutes in den jeweiligen Behälter umformbar sind, wobei die Form mit Bodenform und Formhälften mehrteilig ausgebildet ist, und der jeweilige Behälter zumindest am Ende des Form- und Füllprozesses zwischen Bodenform unten und Form- und Füllelement oben einspannbar ist, und wobei der Behälter nach dem Formen und Füllen von dem jeweiligen Form- und Füllelement und der jeweiligen Form trennbar ist.

Zur Erläuterung des Hintergrunds der Erfindung und der Aufgabenstellung wird auf die WO 2012/156013 A1 Bezug genommen. Dort sind auf einem Arbeitsrad umlaufende Form- und Füllstellen offenbart, die hier als Form- und Füllstationen bezeichnet werden. Jede Form- und Füllstation weist ein Form- und Füllelement und eine Form zur Aufnahme eines Vorformlings und zum Ausformen eines Behälters auf.

Aus demselben Dokument ist auch ein sogenanntes FormFill-Verfahren bekannt, bei dem die Behälter, insbesondere Flaschen aus thermoplastischem Material, aus thermisch konditionierten Vorformlingen hergestellt und gleichzeitig aus dem Form- und Füllelement mit einem flüssigen Füllgut befüllt werden, welches als hydraulisches Druckmedium zum Expandieren des Vorformlings bzw. zum Ausformen des Behälters mit einem Form- und Fülldruck zugeführt wird. Zeitgleich mit dem Befüllen wird der jeweilige Vorformling in der Form zum Behälter verformt.

Das Füllen des Vorformlings mit dem flüssigen Füllgut erfolgt durch das Form- und Füllelement, welches zumindest eine Fülldüse beinhaltet. Das Form- und Füllelement dichtet während des Füllvorgangs eine nach oben gerichtete Öffnung des Vorformlings ab, sodass kein Füllgut unkontrolliert austreten kann. Zur Entnahme des gefüllten Behälters müssen jedoch das Form- und Füllelement von der Öffnung abgehoben und die Form geöffnet werden. Dabei kann eine geringe Menge Füllgut auf Innenflächen der Form gelangen. Die Benetzung der Innenflächen mit Füllgut ziehen eine Fehlstellenbildung beim Füllen und Formen eines nachfolgenden Behälters nach sich, mit entsprechenden Qualitätsmängeln. Auch werden die hygienischen Verhältnisse beeinträchtigt.

Die Form besteht typischerweise aus mehreren Bestandteilen, nämlich zwei sogenannten Formhälften und einer Bodenform. Die Formhälften definieren üblicherweise Seiten- und Schulterkontur der Behälter, während die Bodenform für die Ausformung eines üblicherweise mit Standfüßen versehenen Behälterbodens vorgesehen ist.

Am Ende des Form- und Füllvorgangs ist der gefüllte Behälter in der Form gehalten und zwischen Form- und Füllelement und Bodenform eingespannt. Zugleich wird der Behälter durch einen stationsseitigen Halter im Bereich des Behälterhalses gehalten. Das Abnehmen des Form- und Füllelements vom Behälter direkt nach dem Öffnen der Form vom Behälter kann, wie oben dargestellt, dazu führen, dass Füllgut aus dem Bereich des Form- und Füllelements auf Innenflächen der Formhälften und der Bodenform gelangen kann. In der WO 2012/156013 A1 wird deswegen eine Reinigung eines Innenraums der Form vorgeschlagen.

Es ist weiterhin im Stand der Technik bekannt, dass ein Vorformling zunächst mit einem Adapterelement oder einem Verlängerungselement versehen wird, das nachfolgend zusammen mit dem Vorformling durch weitere Bearbeitungsstationen läuft. So zeigt z.B. die US 10,350,815 B2 ein Verlängerungselement, das auf den Mündungsbereich eines Vorformlings aufgesetzt wird und das nachfolgend zusammen mit dem Vorformling in eine umlaufend auf einem Arbeitsrad angeordnete Form- und Füllstation übergeben wird. Nach dem Umformen und Befüllen des Vorformlings wird der gefüllte Behälter mitsamt aufgesetztem Verlängerungsstück schließlich zu einem anderen Arbeitsrad weitertransportiert, wo Behälter und Verlängerungsstück getrennt werden, um den Behälter anschließend zu verschließen. Dieses Verlängerungsstück soll als Schwappschutz das Austreten von Füllgut vermeiden.

Aufgabe der vorliegenden Erfindung ist die Schaffung eines Verfahrens und/oder einer Vorrichtung, derart, dass möglichst kein Füllgut auf Innenflächen der Form gelangen kann.

Zur Lösung der Aufgabe weist das erfindungsgemäße Verfahren die Merkmale des Anspruchs 1 auf. Insbesondere ist vorgesehen, dass die Formhälften vom jeweiligen Behälter abgenommen werden, bevor das Form- und Füllelement und die Bodenform vom Behälter getrennt werden. Die Formhälften werden zunächst vom jeweiligen Behälter gelöst, so dass Spritzer oder am Behälter ablaufende Tropfen des Füllgutes beim späteren Abheben des Form- und Füllelements die Innenflächen der Formhälften möglichst nicht erreichen können. Dabei bleibt der jeweilige Behälter zwischen Form- und Füllelement und Bodenform eingespannt. Erst später werden das Form- und Füllelement und die Bodenform vom Behälter getrennt. Eine wesentliche Besonderheit des erfindungsgemäßen Verfahrens ist die dargestellte Reihenfolge der einzelnen Schritte. Im Stand der Technik werden hingegen Bodenform und Seitenformhälften zeitgleich, häufig sogar bewegungsgekoppelt vom Behälter abgenommen.

Nach einem weiteren Gedanken der Erfindung kann vorgesehen sein, dass die Formhälften in seitlicher Richtung und/oder schräg abwärts vom jeweiligen Behälter abgenommen werden. Dadurch können die Formhälften in eine ungefährdete Position bewegt werden, das heißt vor Verunreinigung durch Füllgut geschützt.

Nach einem weiteren Gedanken der Erfindung kann vorgesehen sein, dass die Formhälften nach einer seitlichen und/oder schräg abwärts gerichteten Bewegung abwärts bewegt werden. Möglich ist demnach auch eine kombinierte Bewegung, zunächst mit einer seitlichen Komponente und anschließend relativ zum Behälter in Abwärtsrichtung.

Nach einem weiteren Gedanken der Erfindung kann vorgesehen sein, dass der jeweilige Behälter im Bereich eines Behälterhalses oder Stützrings gehalten wird, während Behälter und Form- und Füllelement voneinander getrennt werden. Der Stützring ist vorzugsweise am Behälterhals vorgesehen. Behälterhals und Stützring sind ohnehin dickwandiger und stabiler als der Behälter im Übrigen und können die sonst vom Form- und Füllelement aufgenommenen Kräfte übernehmen. Bevor Behälter und Form- und Füllelement voneinander getrennt werden, wird der Behälter im Bereich des Behälterhalses erfasst, vorzugsweise am Behälterhals, am Stützring oder unter dem Stützring.

Nach einem weiteren Gedanken der Erfindung kann vorgesehen sein, dass der jeweilige Behälter im Bereich eines Behälterhalses und auf der Bodenform gehalten wird, während Behälter und Form- und Füllelement voneinander getrennt werden. In dieser Phase kann der Behälter zwischen Behälterhals und Bodenform eingespannt sein.

Nach einem weiteren Gedanken der Erfindung kann vorgesehen sein, dass die Bodenform nach unten vom jeweiligen Behälter abgenommen wird, während der Behälter im Bereich des Behälterhalses gehalten wird. Demnach wird die Bodenform vorzugsweise zuletzt abgenommen, nachdem die Formhälften und das Form- und Füllelement vom Behälter abgenommen wurden.

Nach einem weiteren Gedanken der Erfindung kann vorgesehen sein, dass der jeweilige Behälter an oder unter einem Stützring gehalten wird, während die Bodenform nach unten vom Behälter abgenommen wird. Der Behälter ist vorzugsweise im Bereich des Behälterhalses mit einem Stützring versehen und kann dort gehalten werden.

Nach einem weiteren Gedanken der Erfindung kann vorgesehen sein, dass die Bodenform zeitlich nach dem Form- und Füllelement vom jeweiligen Behälter getrennt wird. Der zeitliche Versatz kann im Sekundenbereich liegen. Dadurch ist sichergestellt, dass Reste des Füllguts nicht auf die Innenfläche der Bodenform gelangen können, sondern vorher abtropfen.

Nach einem weiteren Gedanken der Erfindung kann vorgesehen sein, dass der jeweilige Behälter nach dem Abnehmen der Formhälften und vor dem Trennen der Bodenform durch einen Entnahmehalter im Bereich eines Behälterhalses oder Stützrings erfasst wird. Demnach wird der Behälter in dem genannten Bereich und in dieser Phase durch einen speziellen Halter erfasst. Vorzugsweise hält der Entnahmehalter den Behälter an oder unter dem Stützring. Der Entnahmehalter kann den Behälter in einem Bereich erfassen, der zuvor von den Formhälften abgedeckt war.

Nach einem weiteren Gedanken der Erfindung kann vorgesehen sein, dass der jeweilige Behälter in der Form- und Füllstation von einem stationsseitigen Halter gehalten wird, dass der stationsseitige Halter den Behälter gemeinsam mit dem Entnahmehalter hält, während Bodenform und Form- und Füllelement vom Behälter getrennt werden, und dass anschließend der stationsseitige Halter vom Behälter gelöst wird. Durch diese Reihenfolge ist sichergestellt, dass der Behälter stets durch wenigstens einen der Halter erfasst ist.

Die zur Lösung der Aufgabe vorgesehene Vorrichtung weist die Merkmale des Anspruchs 11 auf. Vorzugsweise ist eine Vorrichtung zum Herstellen von gefüllten Behältern aus Vorformlingen mit insbesondere karussellartig umlaufenden Form- und Füllstationen vorgesehen, welche ein Form- und Füllelement und eine Form zur Aufnahme der Vorformlinge aufweisen, wobei die Vorformlinge jeweils an die Form- und Füllelemente übergebbar und in der Form durch Druckeinwirkung eines zugeführten Füllgutes in den jeweiligen Behälter umformbar sind, wobei die Form mit Bodenform und Formhälften mehrteilig ausgebildet ist, und der jeweilige Vorformling während des Form- und Füllprozesses zwischen Bodenform unten und Form- und Füllelement oben einspannbar ist, und wobei der Behälter nach dem Formen und Füllen von dem jeweiligen Form- und Füllelement und der jeweiligen Form trennbar ist. Erfindungsgemäß kann vorgesehen sein, dass die Formhälften vom jeweiligen Behälter abnehmbar sind, bevor das Form- und Füllelement und die Bodenform vom Behälter getrennt werden. Die Vorrichtung weist hierfür eine geeignete Steuerung und Organe zur Bewegung der Formhälften, der Bodenformen und der Form- und Füllelemente auf.

Nach einem weiteren Gedanken der Erfindung kann vorgesehen sein, dass die Formhälften aus einer Form- und Füllposition in eine Entnahmeposition seitlich und/oder schräg abwärts bewegbar sind.

Nach einem weiteren Gedanken der Erfindung kann vorgesehen sein, dass die Formhälften in die Entnahmeposition seitlich und abwärts bewegbar sind.

In an sich bekannter Weise können stationsseitige Halter an jeder Form- und Füllstation zum Erfassen der Vorformlinge und Behälter im Bereich eines Behälterhalses oder Stützrings vorgesehen sein. Ebenso können an sich bekannte Entnahmehalter im Bereich einer Entnahmestation zum Erfassen der Behälter im Bereich des Behälterhalses oder Stützrings vorgesehen sein. Zeitweilig soll der gefüllte Behälter insbesondere zugleich vom stationsseitigen Halter und vom Entnahmehalter gehalten sein, bevor der stationsseitige Halter gelöst wird.

Weitere Merkmale der Erfindung ergeben sich aus der Beschreibung im Übrigen und aus den Ansprüchen. Es zeigen:
- Fig. 1: eine schematische Draufsicht auf eine Vorrichtung zum Herstellen von gefüllten Behältern aus Vorformlingen,
- Fig. 2: einen Teil der Vorrichtung gemäß Fig. 1 in einem aufrechten Schnitt, insbesondere eine Form mit gefülltem Behälter und in einer ersten Phase,
- Fig. 3: die Darstellung gemäß Fig. 2, in einer zweiten Phase, und
- Fig. 4: die Darstellung gemäß Fig. 3, in einer dritten Phase und mit leicht abgewandelter Form.

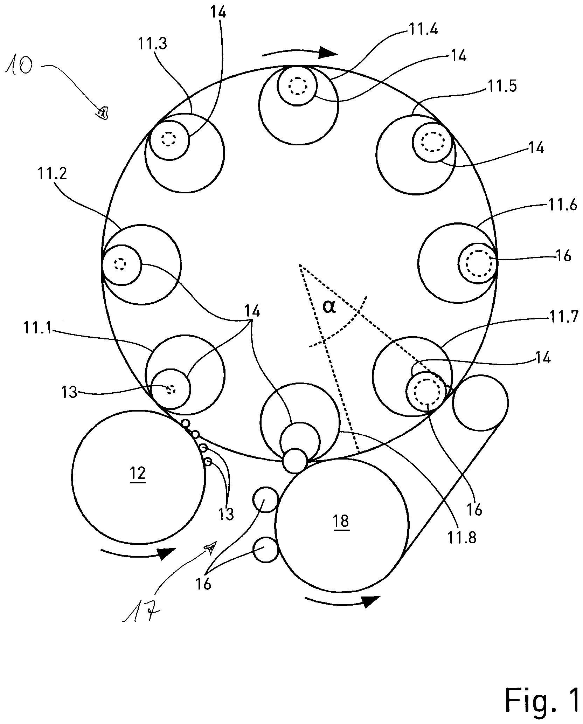

Es wird zunächst Bezug genommen auf Fig. 1. Wie in der WO 2012/156014 A1 sind am Umfang eines Arbeitsrades 10 in Umfangsrichtung aufeinanderfolgend mehrere Form- und Füllstationen 11.1-11.8 angeordnet. Nummerierung und Anzahl sind willkürlich gewählt. Es können auch mehr oder weniger Form- und Füllstationen vorgesehen sein. Arbeitsrad 10 und Form- und Füllstationen 11.1-11.8 bilden ein Karussell mit aufrechter Drehachse, dem mittels eines Übergabeförderers 12 Vorformlinge 13 aus thermoplastischem Material im Wesentlichen tangential zugeführt werden.

Jede Form- und Füllstation 11.1-11.8 weist ein Form- und Füllelement 14 auf, welches eine Fülldüse 15 beinhaltet. Während des Umlaufs auf dem Arbeitsrad 10 werden die Vorformlinge 13 aus dem Form- und Füllelement 14 befüllt und dabei zugleich zu Behältern 16 verformt. Die fertig ausgeformten Behälter 16 werden im Wesentlichen tangential im Bereich einer Übergabestelle 17 an einen Entnahmeförderer 18 übergeben. Dementsprechend ist in der Form- und Füllstation 11.8, welche sich gerade zwischen Entnahmeförderer 18 und Übergabeförderer 12 befindet, kein Behälter 16 vorhanden. Das Arbeitsrad 10 dreht in der dargestellten Draufsicht von oben im Uhrzeigersinn, während Übergabeförderer 12 und Entnahmeförderer 18 gegen den Uhrzeigersinn umlaufen.

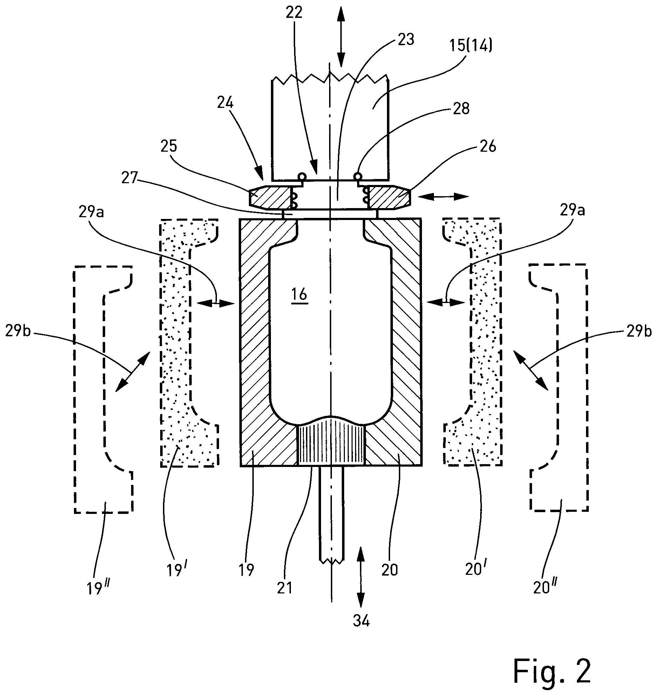

In jeder Form- und Füllstation 11.1-11.8 ist zusätzlich zum Form- und Füllelement 14 eine in Fig. 1 nicht gezeichnete Form zur Aufnahme der Vorformlinge 13 und zu deren Ausformung in die Behälter 16 vorgesehen. Die Form ist in den Fig. 2 bis 4 ersichtlich und besteht hier in bekannter Weise aus zwei Formhälften 19, 20 und einer Bodenform 21. Die Fig. 2 bis 4 beziehen sich auf den fertig ausgebildeten Behälter 16 und auf einen Ablauf etwa zwischen der Position der Form- und Füllstation 11.6 und dem Entnahmeförderer 18. In diesem Bereich ist das Füllen und Ausformen der Behälter 16 abgeschlossen. Die Behälter kühlen dort soweit ab, dass eine ausreichende Formstabilität besteht. Außerdem werden die Teile der Form (Formhälften 19, 20 und Bodenform 21) einerseits und das Form- und Füllelement 14 andererseits sowie weitere gezeichnete Vorrichtungsteile in besonderer Weise bewegt.

Wie in Fig. 2 dargestellt, ist der Behälter 16 zwischen den Formhälften 19, 20, der Bodenform 21 und der Düse 15 des Form- und Füllelements 14 gehalten. Um eine Dichtigkeit zwischen einer Behälteröffnung 22 am oberen Ende eines Behälterhalses 23 und der Düse 15 zu gewährleisten, ist der Behälter 16 zwischen der Bodenform 21 und der Düse 15 eingespannt.

Der Behälter 16 ist außerdem im Bereich des Behälterhalses 23 von einem stationsseitigen Halter 24 mit Haltewangen 25, 26 gehalten. Der Halter 24 ist demnach Bestandteil einer jeden Form- und Füllstation 11.1-11.8.

Der Behälter 16 weist am unteren Ende des Behälterhalses 23 einen Stützring 27 auf und ist außerdem außenseitig mit einem nicht näher dargestellten Gewinde zum Aufschrauben einer Verschlusskappe versehen. Hinsichtlich seiner äußeren Gestalt entspricht der Behälter 16 z.B. einer handelsüblichen PET-Flasche für Mineralwasser oder andere sogenannte Soft-Drinks.

Die Düse 15 liegt mit einer umlaufenden Dichtung 28 am Behälterhals 23 an.

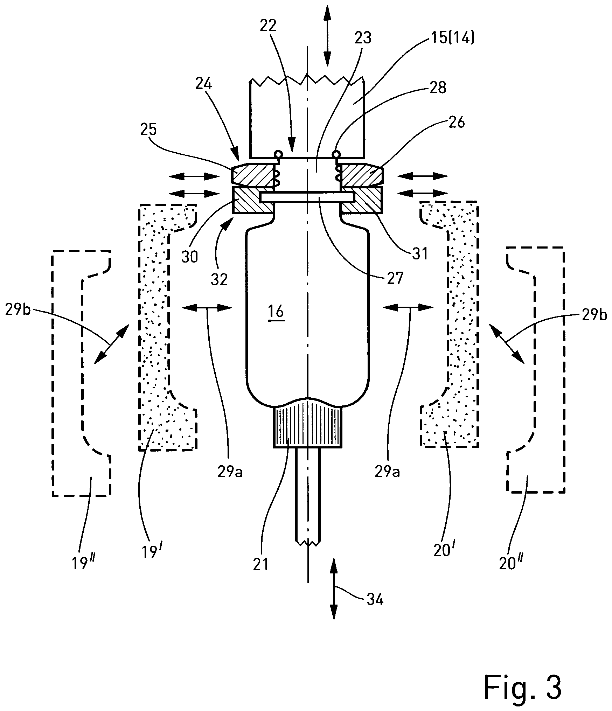

Nach dem Befüllen und Ausformen des Behälters 16 werden hier zunächst die beiden Formhälften 19, 20 vom Behälter 16 gelöst und seitwärts bewegt, siehe Pfeile 29a. Hierfür sind in den Figuren nicht dargestellte Halte- und Bewegungsmittel vorgesehen, etwa rotatorisch oder translatorisch bewegliche und angetriebene Tragarme oder Hebel. Die sich durch die Seitwärtsbewegung ergebende neue Position der Formhälften ist in den Fig. 2 und 3 mit der Darstellung der gepunkteten Formhälften 19' und 20' wiedergegeben. Die Bodenform 21 liegt in dieser Phase weiterhin am Behälter 16 an, sodass der Behälter 16 zwischen dem Form- und Füllelement 14 und der Bodenform 21 eingespannt bleibt, während die Formhälften 19, 20 seitwärts vom Behälter wegbewegt werden.

Wie in Fig. 2 ersichtlich, reichen die Formhälften 19, 20 bis unmittelbar unter den Stützring 27. Nach der beschriebenen seitlichen Bewegung der Formhälften 19, 20 wird der Behälter im Bereich des nun frei zugänglichen Stützrings 27 durch Haltewangen 30, 31 eines Entnahmehalters 32 erfasst, sodass zeitweilig sowohl der stationsseitige Halter 24 als auch der Entnahmehalter 32 den Behälter 16 halten.

In einem nächsten Schritt werden die Formhälften 19, 20 abwärts oder schräg abwärts bewegt, siehe Pfeile 29b und gestrichelt umrandete Formhälften 19" und 20" in den Fig. 2 und 3. Der Abstand der Formhälften 19" und 20" zum Behälter 16 entspricht vorzugsweise ein bis vier Behälterdurchmessern. Relativ zur Behälterhöhe sind die Formhälften 19" und 20" um vorzugsweise 20-100% abgesenkt, insbesondere etwa 30%, wie in Fig. 3 dargestellt. Füllgutspritzer können so in der nächsten Phase nicht die Formhälften treffen.

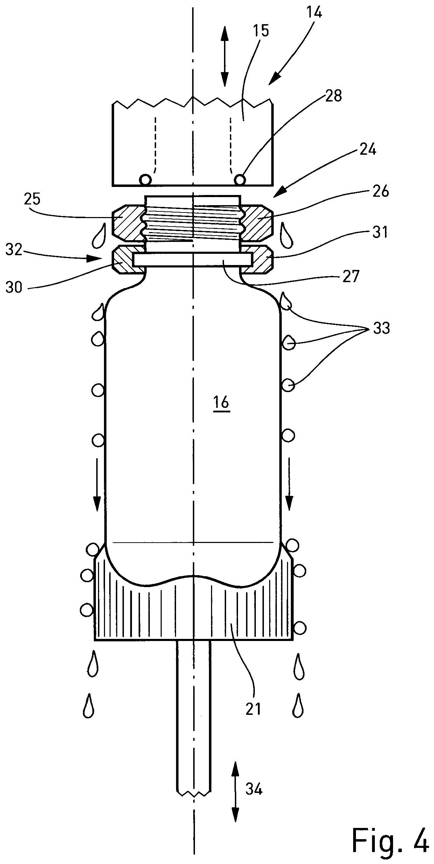

Gemäß Fig. 4 wird in einer nächsten Phase das Form- und Füllelement 14 von der Behälteröffnung 22 abgehoben. Dabei wird der Behälter 16 noch von dem stationsseitigen Halter 24 und vom Entnahmehalter 32 gehalten. Auch liegt die Bodenform 21 noch unten am Behälter 16 an.

Aufgrund des Drucks im Inneren des Behälters 16, insbesondere nach einem Befüllen mit karbonisiertem Füllgut, gelangen nun Füllgutreste 33 aus dem Form- und Füllelement 14 oder aus der Behälteröffnung 22 nach außen, etwa seitwärts als Spritzer oder als am Behälter 16 hinablaufende Tropfen, wie in Fig. 4 dargestellt. Die Formhälften 19" und 20" sind so weit entfernt, dass deren Innenflächen von den Spritzern oder Tropfen nicht benetzt werden können. Die Tropfen laufen außen am Behälter 16 und außen an der Bodenform 21 nach unten. Spritzer fliegen über die Formhälften hinweg. Auch Innenflächen der Bodenform 21 werden nicht benetzt. Optimale hygienische Verhältnisse werden gewahrt. Fehlstellen beim Herstellen eines weiteren Behälters nach der Aufnahme eines neuen Vorformlings werden vermieden.

Die in Fig. 4 dargestellte Konstellation wird eine Zeit lang beibehalten, um so ein vollständiges Abtropfen zu gewährleisten. Erst danach wird die Bodenform 21 abgesenkt und so vom Behälter 16 getrennt, siehe Pfeil 34. Der für das Abtropfen vorgesehene Zeitraum entspricht einer Teildrehung des Arbeitsrades 4 bzw. einem überstrichenen Winkel α, siehe Fig. 1. Der Winkel α beträgt vorzugsweise 5°-30°.

Die Bodenform 21 wird erst abgesenkt, nachdem die Füllgutreste 33 abgelaufen sind. Aufgrund der Drehbewegung des Arbeitsrades 10 werden die Füllgutreste zum Teil auch abgeschleudert.

Anschließend werden die Behälter 16 an den Entnahmeförderer 18 übergeben. Hierzu löst der stationsseitige Halter 24 seine Haltewangen 25, 26 vom Behälterhals 23.

Nach der Übergabe des Behälters 16 an den Entnahmeförderer 18 werden Formhälften und Bodenform in eine Position zurückbewegt, in der eine Aufnahme des nächsten Vorformlings 13 und ein schnelles Schließen der Form insgesamt möglich sind.

Fig. 2 und 3 einerseits und Fig. 4 andererseits zeigen unterschiedliche Bodenformen 21. Diese können im Durchmesser kleiner sein als der Behälter 16 oder seitlich leicht über den Behälter 16 hinausragen, siehe Fig. 4. In beiden Fällen ist ein Abtropfen der Füllgutreste 33 möglich. In der etwas schmaleren Ausgestaltung der Bodenform 21 gemäß den Fig. 2 und 3 ist der Abtropfvorgang etwas sicherer. Bei Verwendung der weiteren Bodenform 21 gemäß Fig. 4 sind die Formhälften im unteren Bereich anzupassen.

Die Formhälften 19, 20 sind keine echten "Hälften", da zumindest die Bodenform 21 zusätzlich vorhanden ist. An Stelle von zwei Formhälften können auch mehr Teile vorgesehen sein, die zusammen die Funktion der hier gezeigten Formhälften ausüben. Als Formhälften werden üblicherweise die Teile einer Form verstanden, die Seiten- und Schulterkonturen der Behälter 16 definieren, im vorliegenden Beispiel bis zum Behälterhals 23 unter dem Stützring 27. Die verwendeten Vorformlinge 13 sind typischerweise bereits mit Behälterhals 23 und Stützring 27 versehen.

**Bezugszeichenliste**

| | | | |
|---|---|---|---|
| 10 | Arbeitsrad | 30 | Haltewange |
| 11.1 | Form- und Füllstation | 31 | Haltewange |
| 11.2 | Form- und Füllstationen | 32 | Entnahmehalter |
| 11.3 | Form- und Füllstationen | 33 | Füllgutreste |
| 11.4 | Form- und Füllstationen | 34 | Pfeil |
| 11.5 | Form- und Füllstationen | | |
| 11.6 | Form- und Füllstationen | α | Winkelbereich |
| 11.7 | Form- und Füllstationen | | |
| 11.8 | Form- und Füllstationen | | |
| 12 | Übergabeförderer | | |
| 13 | Vorformlinge | | |
| 14 | Form- und Füllelement | | |
| 15 | Fülldüse | | |
| 16 | Behälter | | |
| 17 | Übergabestelle | | |
| 18 | Entnahmeförderer | | |
| 19 | Formhälfte | | |
| 19' | Formhälfte 19 an anderer Position | | |
| 19" | Formhälfte 19 an anderer Position | | |
| 20 | Formhälfte | | |
| 20' | Formhälfte 20 an anderer Position | | |
| 20" | Formhälfte 20 an anderer Position | | |
| 21 | Bodenform | | |
| 22 | Behälteröffnung | | |
| 23 | Behälterhals | | |
| 24 | Stationsseitiger Halter | | |
| 25 | Haltewange | | |
| 26 | Haltewange | | |
| 27 | Stützring | | |
| 28 | Dichtung | | |
| 29a | Pfeile | | |
| 29b | Pfeile | | |

## Patentansprüche

1. Verfahren zum Herstellen von gefüllten Behältern (16) aus Vorformlingen (13) in einer umlaufenden Form- und Füllstation, die auf einem Arbeitsrad angeordnet ist und die eine zu der Station gehörende und also mit der Station umlaufende Form und ein zu der Station gehörendes und mit der Station umlaufendes Form- und Füllelement aufweist, wobei das Füllen des Vorformlings mit einem flüssigen Füllgut durch das Form- und Füllelement erfolgt, welches zumindest eine Fülldüse beinhaltet und welche während des Füllvorgangs eine nach oben gerichtete Öffnung des Vorformlings abdichtet, sodass kein Füllgut unkontrolliert austreten kann und wobei zur Entnahme des gefüllten Behälters das Form- und Füllelement von der Öffnung abgehoben und die Form geöffnet werden kann, wobei die Vorformlinge (13) jeweils an das umlaufende Form- und Füllelement (14) der Form- und Füllstation (11.1-11.8) übergeben und in einem anschließenden Form- und Füllprozess in der Form durch Druckeinwirkung des zugeführten Füllgutes in den jeweiligen Behälter (16) umgeformt werden, wobei die Form mit Bodenform (21) und Formhälften (19, 20) mehrteilig ausgebildet ist, und der jeweilige Behälter (16) zumindest am Ende des Form- und Füllprozesses zwischen Bodenform (21) unten und Form- und Füllelement (14) oben eingespannt ist, und wobei der Behälter (16) nach dem Formen und Füllen von dem jeweiligen Form- und Füllelement (14) und der jeweiligen Form getrennt wird, **dadurch gekennzeichnet, dass** die Formhälften (19, 20) vom jeweiligen Behälter (16) abgenommen werden, bevor das Form- und Füllelement (14) und die Bodenform (21) vom Behälter (16) getrennt werden.

2. Verfahren nach Anspruch 1, **dadurch gekennzeichnet, dass** die Formhälften (19, 20) in seitlicher Richtung und/oder schräg abwärts vom jeweiligen Behälter (16) abgenommen werden.

3. Verfahren nach Anspruch 2, **dadurch gekennzeichnet, dass** die Formhälften (19, 20) nach einer seitlichen und/oder schräg abwärts gerichteten Bewegung abwärts bewegt werden.

4. Verfahren nach einem der Ansprüche 1-3, **dadurch gekennzeichnet, dass** der jeweilige Behälter (16) im Bereich eines Behälterhalses (23) oder Stützrings (27) gehalten wird, während Behälter (16) und Form- und Füllelement (14) voneinander getrennt werden.

5. Verfahren nach einem der Ansprüche 1-4, **dadurch gekennzeichnet, dass** der jeweilige Behälter (16) im Bereich eines Behälterhalses (23) und auf der Bodenform (21) gehalten wird, während Behälter (16) und Form- und Füllelement (14) voneinander getrennt werden.

6. Verfahren nach einem der Anspruch 5, **dadurch gekennzeichnet, dass** die Bodenform (21) nach unten vom jeweiligen Behälter (16) abgenommen wird, während der Behälter (16) im Bereich des Behälterhalses (23) gehalten wird.

7. Verfahren nach einem der Ansprüche 4-6, **dadurch gekennzeichnet, dass** der jeweilige Behälter (16) an oder unter einem Stützring (27) gehalten wird, während die Bodenform (21) nach unten vom Behälter (16) abgenommen wird.

8. Verfahren nach einem der Ansprüche 1-7, **dadurch gekennzeichnet, dass** die Bodenform (21) zeitlich nach dem Form- und Füllelement (14) vom jeweiligen Behälter (16) getrennt wird.

9. Verfahren nach einem der Anspruch 8, **dadurch gekennzeichnet, dass** der jeweilige Behälter (16) nach dem Abnehmen der Formhälften (19, 20) und vor dem Trennen der Bodenform (21) durch einen Entnahmehalter (32) im Bereich eines Behälterhalses (23) oder Stützrings (27) erfasst wird.

10. Verfahren nach Anspruch 9, **dadurch gekennzeichnet, dass** der jeweilige Behälter (16) in der Form- und Füllstation (11.1-11.8) von einem stationsseitigen Halter (24) gehalten wird, dass der stationsseitige Halter (24) den Behälter (16) gemeinsam mit dem Entnahmehalter (32) hält, während Bodenform (21) und Form- und Füllelement (14) vom Behälter (16) getrennt werden, und dass anschließend der stationsseitige Halter (24) vom Behälter (16) gelöst wird.

11. Vorrichtung zum Herstellen von gefüllten Behältern (16) aus Vorformlingen (13), mit karussellartig umlaufenden Form- und Füllstationen (11.1-11.8), welche auf einem Arbeitsrad angeordnet sind und zu den Stationen gehörende Form- und Füllelemente (14) und Formen zur Aufnahme der Vorformlinge (13) aufweisen, die also mit den Form- und Füllstationen umlaufen, wobei das Form- und Füllelement für das Füllen des Vorformlings mit einem flüssigen Füllgut ausgebildet ist und zumindest eine Fülldüse beinhaltet, und wobei das Form- und Füllelement eine nach oben gerichtete Öffnung des Vorformlings während des Füllvorgangs abdichtend ausgebildet ist, sodass kein Füllgut unkontrolliert austreten kann, und wobei zur Entnahme des gefüllten Behälters das Form- und Füllelement von der Öffnung abhebbar ist und die Form geöffnet werden kann, wobei die Vorformlinge (13) jeweils an die Form- und Füllelemente (14) übergebbar und in der Form durch Druckeinwirkung eines zugeführten Füllgutes in den jeweiligen Behälter (16) umformbar sind, wobei die Form mit Bodenform (21) und Formhälften (19, 20) mehrteilig ausgebildet ist, und der jeweilige Behälter (16) zumindest am Ende des Form- und Füllprozesses zwischen Bodenform (21) unten und Form- und Füllelement (14) oben einspannbar ist, und wobei der Behälter (16) nach dem Formen und Füllen von dem jeweiligen Form- und Füllelement (14) und der jeweiligen Form trennbar ist, **dadurch gekennzeichnet, dass** die Formhälften (19, 20) vom jeweiligen Behälter (16) abnehmbar sind, bevor das Form- und Füllelement (14) und die Bodenform (21) vom Behälter (16) getrennt werden.

12. Vorrichtung nach Anspruch 11, **dadurch gekennzeichnet, dass** die Formhälften (19, 20) aus einer Form- und Füllposition in eine Entnahmeposition seitlich und/oder schräg abwärts bewegbar sind.

13. Vorrichtung nach Anspruch 12, **dadurch gekennzeichnet, dass** die Formhälften (19, 20) in die Entnahmeposition seitlich und abwärts bewegbar sind.

## Claims

1. A method for producing filled containers (16) from preforms (13) in a circumferentially running forming and filling station, which is arranged on a working wheel and which comprises a mould belonging to the station and thus running circumferentially along with the station and a forming and filling element belonging to the station, thereby running circumferentially along with the station, wherein the filling of the preform with a liquid filling material is carried out by the forming and filling element, which contains at least one filling nozzle and which seals an upward-facing opening of the preform during the filling process so that no filling material can escape uncontrollably, and wherein the forming and filling element can be lifted from the opening and the mould can be opened for the removal of the filled container, wherein the preforms (13) are each transferred to the circumferentially running forming and filling element (14) of the forming and filling station (11.1-11.8) and are formed into the respective container (16) due to the pressure effect of the fed filling material during a subsequent forming and filling process, wherein the mould with mould base (21) and mould halves (19, 20) is designed as a plurality of parts, and the respective container (16) is clamped in at least at the end of the forming and filling process between the mould base (21) below and the moulding and filling element (14) at the top, and wherein the container (16) is separated from the respective forming and filling element (14) after forming and filling, **characterized in that** the mould halves (19, 20) are removed from the respective container (16) before the forming and filling element (14) and the mould base (21) are separated from the container (16).

2. The method according to Claim 1, **characterized in that** the mould halves (19, 20) are removed from the respective container (16) in the lateral direction and/or obliquely downwards.

3. The method according to Claim 2, **characterized in that** the mould halves (19, 20) are moved downwards after a lateral and/or oblique downward movement.

4. The method according to any one of the Claims 1-3, **characterized in that** the respective container (16) is held in the area of a container neck (23) or support ring (27) while container (16) and forming and filling element (14) are separated from each other.

5. The method according to any one of the Claims 1-4, **characterized in that** the respective container (16) is held in the area of a container neck (23) and on the mould base (21) while container (16) and forming and filling element (14) are separated from each other.

6. The method according to Claim 5, **characterized in that** the mould base (21) is removed downwards from the respective container (16) while the container (16) is held in the area of the container neck (23).

7. The method according to any one of the Claims 4-6, **characterized in that** the respective container (16) is held on or under a support ring (27) while the mould base (21) is removed downwards from the container (16).

8. The method according to any one of the Claims 1-7, **characterized in that** the mould base (21) is separated from the respective container (16) after the forming and filling element (14) in terms of time.

9. The method according to Claim 8, **characterized in that** the respective container (16) is grasped by a removal holder (32) in the area of a container neck (23) or support ring (27) after removal of the mould halves (19, 20) and before separation of the mould base (21).

10. The method according to Claim 9, **characterized in that** the respective container (16) is held in the forming and filling station (11.1-11.8) by a station-side holder (24), that the station-side holder (24) holds the container (16) together with the removal holder (32), while the mould base (21) and the forming and filling element (14) are separated from the container (16), and that the station-side holder (24) is subsequently detached from the container (16).

11. A device for producing filled containers (16) from preforms (13), with carousel-like circumferentially running forming and filling stations (11.1-11.8), which are arranged on a working wheel and comprise forming and filling elements (14) and moulds for receiving the preforms (13) belonging to the stations, which thus circumferentially run with the forming and filling stations, wherein the forming and filling element is designed for filling the preform with a liquid filling material and comprises at least one filling nozzle and wherein the forming and filling element is designed to seal an upward-facing opening of the preform during the filling process so that no filling material can escape uncontrollably, and wherein the forming and filling element can be lifted off from the opening for the removal of the filled container and the mould can be opened, wherein the preforms (13) can each be transferred to the forming and filling elements (14) and can be formed within the mould by means of the pressure of a fed filling material into the respective container (16), wherein the mould with mould base (21) and mould halves (19, 20) is designed as a plurality of parts, and the respective container (16) can be clamped in at least at the end of the forming and filling process between the mould base (21) below and the forming and filling element (14) at the top, and wherein the container (16) can be separated from the respective forming and filling element (14) and the respective mould after forming and filling, **characterized in that** the mould halves (19, 20) are removable from the respective container (16) before the forming and filling element (14) and the mould base (21) are separated from the container (16).

12. The device according to Claim 11, **characterized in that** the mould halves (19, 20) can be moved laterally and/or obliquely downwards from a forming and filling position to a removal position.

13. The device according to Claim 12, **characterized in that** the mould halves (19, 20) can be moved laterally and downwards to the removal position.

## Revendications

1. Procédé de fabrication de récipients remplis (16) à partir de préformes (13) dans une station de moulage et de remplissage en rotation agencée sur une roue de travail et présentant un moule faisant partie de la station et donc en rotation avec celle-ci et un élément de moulage et de remplissage faisant partie de la station et en rotation avec celle-ci, le remplissage de la préforme avec un produit de remplissage liquide ayant lieu par l'élément de moulage et de remplissage, lequel comporte au moins une buse de remplissage qui étanchéifie pendant le processus de remplissage une ouverture de la préforme dirigée vers le haut de façon à éviter un débordement incontrôlé de produit de remplissage, l'élément de moulage et de remplissage pouvant être relevé pour dégager l'ouverture et le moule pouvant être ouvert pour en retirer le récipient rempli, les préformes (13) étant respectivement remises à l'élément de moulage et de remplissage (14) en rotation de la station de moulage et de remplissage (11.1-11.8) puis, au cours d'un processus de moulage et de remplissage suivant dans le moule, transformées en récipients (16) respectifs sous l'effet de la pression exercée par le produit de remplissage qui y est amené, le moule étant composé de plusieurs parties avec un fond de moule (21) et des demi-moules (19, 20) et le récipient (16) respectif étant, au moins en fin de processus moulage et de remplissage, encastré entre le fond de moule (21) en bas et l'élément de moulage et de remplissage (14) en haut, et le récipient (16) étant, après le moulage et le remplissage, séparé de l'élément de moulage et de remplissage (14) et du moule correspondants, **caractérisé en ce que** les demi-moules (19, 20) sont retirés du récipient (16) respectif avant de séparer l'élément de moulage et de remplissage (14) et le fond de moule (21) du récipient (16).

2. Procédé selon la revendication 1, **caractérisé en ce que** les demi-moules 19, 20) peuvent être séparés du récipient respectif (16) latéralement et/ou obliquement vers le bas.

3. Procédé selon la revendication 2, **caractérisé en ce que**, après le déplacement latéral et/ou oblique vers le bas des demi-moules (19, 20), ceux-ci sont déplacés vers le bas.

4. Procédé selon l'une des revendications 1 à 3, **caractérisé en ce que** le récipient (16) respectif est maintenu au niveau d'un col (23) ou d'une collerette d'appui (27) pendant qu'il est séparé de l'élément de moulage et de remplissage (14).

5. Procédé selon l'une des revendications 1 à 4, **caractérisé en ce que** le récipient (16) respectif est maintenu au niveau d'un col (23) et sur le fond de moule (21) pendant qu'il est séparé de l'élément de moulage et de remplissage (14).

6. Procédé selon la revendication 5, **caractérisé en ce que** le fond de moule (21) est séparé vers le bas du récipient (16) respectif pendant que celui-ci est maintenu au niveau de son col (23).

7. Procédé selon l'une des revendications 4 à 6, **caractérisé en ce que** le récipient (16) respectif est maintenu par ou sous une collerette d'appui (27) pendant que le fond de moule (21) est séparé du récipient (16) vers le bas.

8. Procédé selon l'une des revendications 1 à 7, **caractérisé en ce que** le fond de moule (21) est séparé du récipient (16) respectif avec un certain décalage temporel après l'élément de moulage et de remplissage (14).

9. Procédé selon la revendication 8, **caractérisé en ce que**, après le retrait des demi-moules (19, 20) et avant la séparation du fond de moule (21), le récipient (16) respectif est saisi au niveau d'un col (23) ou d'une collerette d'appui (27) par un support d'extraction (32).

10. Procédé selon la revendication 9, **caractérisé en ce que** le récipient (16) respectif est maintenu dans la station de moulage et de remplissage (11.1-11.8) par un support (24) faisant partie de la station et que le support (24) faisant partie de la station et le support d'extraction (32) maintiennent ensemble le récipient (16) pendant que le fond du moule (21) et l'élément de moulage et de remplissage (14) sont séparés du récipient (16), après quoi le support (24) faisant partie de la station est détaché du récipient (16).

11. Dispositif de fabrication de récipients remplis (16) à partir de préformes (13) avec des stations de moulage et de remplissage (11.1-11.8) de type carrousel en rotation agencées sur une roue de travail et présentant des éléments de moulage et de remplissage (14) et des moules pour préformes (13) faisant partie de la station et donc en rotation avec celle-ci, l'élément de moulage et de remplissage étant conçu pour le remplissage de la préforme avec un produit de remplissage liquide et comportant au moins une buse de remplissage, l'élément de moulage et de remplissage étant conçu pour étanchéifier pendant le processus de remplissage une ouverture de la préforme dirigée vers le haut de façon à éviter un débordement incontrôlé de produit de remplissage, l'élément de moulage et de remplissage pouvant être relevé pour dégager l'ouverture et le moule pouvant être ouvert pour en retirer le récipient rempli, les préformes (13) pouvant être respectivement remises à l'élément de moulage et de remplissage (14) et transformées dans le moule en récipients (16) respectifs sous l'effet de la pression exercée par le produit de remplissage, le moule étant composé de plusieurs parties avec un fond de moule (21) et des demi-moules (19, 20) et le récipient (16) respectif pouvant, au moins en fin de processus moulage et de remplissage, être encastré entre le fond de moule (21) en bas et l'élément de moulage et de remplissage (14) en haut, et le récipient (16) pouvant, après le moulage et le remplissage, être séparé de l'élément de moulage et de remplissage (14) et du moule correspondants, **caractérisé en ce que** les demi-moules (19, 20) peuvent être retirés du récipient (16) respectif avant de séparer l'élément de moulage et de remplissage (14) et le fond de moule (21) du récipient (16).

12. Dispositif selon la revendication 11, **caractérisé en ce que** les demi-moules (19, 20) peuvent être déplacés latéralement et/ou obliquement vers le bas pour passer d'une position de moulage et de remplissage à une position d'extraction.

13. Dispositif selon la revendication 12, **caractérisé en ce que** les demi-moules (19, 20) peuvent être déplacés latéralement et vers le bas pour passer en position d'extraction.
